# EUROPÄISCHE PATENTANMELDUNG

(11) **EP 1 536 567 A1**
(43) Veröffentlichungstag der Anmeldung: **01.06.2005**
(21) Anmeldenummer: 04019540.6
(22) Anmeldetag: 18.08.2004
(51) Int. Cl.: H03M 7/30

(54) **Verfahren zur Kompression von Daten**

(30) Priorität: 14.11.2003 DE 10353132
(71) Anmelder: Forschungszentrum Karlsruhe GmbH, 76133 Karlsruhe (DE)
(72) Erfinder: Stripf, Helmut, 76344 Eggenstein-Leopoldshafen (DE)

(57) **Zusammenfassung**

Ein Verfahren zur Kompression von Daten, die während der Messfahrt eines Molches durch eine Rohrleitung gewonnen werden.
Die aus den Messsignalen gewonnenen Daten werden hinsichtlich ihrer Relevanz einer gesonderten Kompression unterworfen. Aus der Differenz des ursprünglichen Signals mit dem in einem digitalen, adaptivem und parametrisierbaren Tiefpass gefilterten Signal wird eine Klasseneinteilung in mindestens drei Klassen vorgenommen. Jeder Klasse wird ein Approximationsintervall mit einem maximalen Approximationsfehler als Parameter zugewiesen. Bei Überschreiten des Approximationsfehlers in einer Klasse wird das Approximationsintervall reduziert und die Approximation neu aufgesetzt. Die Anzahl übersprungener Werte wird in den komprimierten Daten abgespeichert.
In allen Klassen können vor der Abspeicherung die Werte überprüft werden. Hierzu wird jeder Messwert des Intervalls mit dem approximierten Wert verglichen und bei Übersteigung der Differenz zwischen approximiertem und realem Messwert die Intervalllänge reduziert. Die für die Dekompression wichtigen Parameter werden als vorgegeben angenommen und in einem Header-Datensatz.

## Beschreibung

Die Erfindung betrifft ein Verfahren zur Kompression von Daten, die während der Messfahrt eines Molches durch eine Rohrleitung gewonnen werden, der mit Sensoren/Messwertgebern zur Messung von Korrosion und Rissen in der Rohrwand bestückt ist.

Zum Prüfen von Rohrleitungen, insbesondere für den Öl- oder Gastransport, sind Prüfmolche bekannt, die am Außenumfang spezifisch empfindliche Sensorenanordnungen angebracht haben, mittels derer der Zustand einer Leitung überprüft werden kann. Die Sensoren können auf unterschiedlichen physikalischen Prinzipien beruhen. Bekannt sind piezoelektrische, elektroakustische, elektromagnetische Sensoren, wie Hall-, Streufluss- und Wirbelstromsensoren.

Die Messsignale der Sensoren werden mit einer Auflösung von 12-16 Bit mit Hilfe von Analog-Digital-Wandlern als digitaler Datensatz mit einer Wiederholungsrate bis zu 7000 Hz aufgezeichnet. Für einen Prüfmolch mit 2000 Sensoren und einer longitudinale Auflösung von 1 mm fallen auf einer Pipelinestrecke von 500 km ca. 1900 GByte an Daten an. Diese müssen während des Prüflaufes gespeichert werden. Damit sich die Datenmenge in dem zur Verfügung stehenden Raum in abspeicherbaren Größenordnungen bewegt und der Molch eine wirtschaftliche Reichweite erreicht, werden die Datensätze komprimiert. Hierzu gibt es verschiedene Verfahren.

Datenkompressionsverfahren haben den Zweck, Informationen bei einer Mindestanzahl von Bits so genau wie möglich darzustellen, um eine zu speichernde Datenmenge bis zu einem Mindestmaß zu minimieren. Eine Möglichkeit ist das Entfernen von redundanten Informationen, wobei die verbleibenden Informationen genau die relevanten Informationen beinhalten.

Die Patente DE 10221192 und DE 4141123 beschreiben Verfahren zur Datenkompression in der Datenverarbeitungseinrichtung eines Ultraschallprüfmolchs. Das dort verwendete Kompressionsverfahren beruht auf einer Lauflängenkodierung, RLE-Kodierung (Run Length Encoding), der Daten in Verbindung mit einem Kompressionsfenster.

Der RLE-Algorithmus eignet sich weniger für magnetische Streufluss-Signale, weil durch das Kompressionsfenster der Signalverlauf im Untergrund nur stufenförmig wiedergegeben wird. Die Defektgrößenbestimmung ist ungenau, weil der Untergrund einer Defektanzeige im Kompressionsfenster liegen kann.

Dies gilt insbesondere für nahtlos gezogene Rohre, bei deren Produktionsverfahren es im Gegensatz zu längs geschweißten Rohren bereits bei der Herstellung zu einer nicht unerheblichen Variation in der Wandstärke kommt. Diese Variation der Wandstärke führt bei dem Streuflussverfahren zu variablem Untergrund, so dass es bei einer RLE-Kompression mit Kompressionsfenster zu Informationsverlusten im Defektbereich kommt.

Bekannt ist auch die aus der mathematischen Wavelet-Transformation entwickelte Wavelet-Kompression (siehe beispielsweise DE 697 15 160 T2 oder http:/engineering.rowan.edu/-polikar/WAVELETS/WTtutorial.html) Eine Definition der Wavelets ist: Wavelets sind Bausteine die Daten schnell dekorrelieren können.
Die schnelle Dekorrelation von Wavelets ist ein Schlüssel zu Kompressionsanwendungen. Das Verfahren beruht auf der Nachbildung des zu komprimierenden Signals durch Überlagerung eines Motherwavelets. Die Kompression erhält man schließlich durch Weglassen einiger Teilwavelets und einer Lauflängenkodierung der übrig gebliebenen Wavelet-Koeffizienten. Um eine dem beschriebenem Verfahren entsprechende Kompression zu erzielen müssen viele Teilwavelets ausselektiert werden. Die Wavelet-Kompression hat dadurch vor allem Probleme die für die Defektgrößenbestimmung wichtigen Spitzenwerte genau wiederzugeben, das sind Anzeigelänge, -breite und -höhe. Die Charakteristik dieser Spitzen ist z. B. bei der Streuflussmesstechnik mit Spulen-Sensoren abhängig von Größe und Art der Wandabnormitäten, der Spulen sowie der Vortriebsgeschwindigkeit des gesamten Molches.

Ein weiteres Problem das für die Wavelet-Kompression gilt, aber auch alle anderen allgemeinen Kompressionsmethoden (siehe z.B. DATACOM/91, Seite 88 ff), ist die Tatsache, dass sie ein Kompressionsprinzip auf die gesamten, ihnen zur Bearbeitung übergebenen Daten anwenden, wobei alle Daten gleich gewichtet bewertet werden. Insbesondere ältere Rohrleitungen haben eine raue Oberfläche. Diese raue Oberfläche bewirkt eine relativ hohe Signalschwankung.

In der DE 196 04 980 C1 ist ein "Verfahren zur Erfassen eines analogen elektrischen Signals mit Datenreduktion" beschrieben. Dieses Verfahren verwendet für alle Daten das gleiche Approximationsverfahren, das Signal wird nicht nach seiner Relevanz bewertet und verschiedenartig approximiert. Damit erzeugt man bei relevanten Stellen einen größeren Fehler oder eine niedrigere Kompression/Reduktion.

Der Erfindung liegt die Aufgabe zugrunde,
mit einem Prüfmolch für Rohrleitungen Defekte, wie Korrosionsstellen und Risse, zu erfassen, die eine Gefährdung bedeuten, wobei die Aussage über die Rauhigkeit der Oberfläche unerheblich sein soll, aber Schwankungen der Geschwindigkeit des Prüfmolches, die Signalanhebungen und -absenkungen bewirken, empfindlich berücksichtigen.

Die Aufgabe wird durch die kennzeichnenden Verfahrensschritte des Anspruchs 1 gelöst.

Mit dem Verfahren werden die mit einem Prüfmolch während der Prüffahrt durch die Rohrleitung erhaltenen ortsabhängigen Messwerte über Korrosion und sonstige Wandstärkeabnormalitäten digitalisiert und die erhaltenen Datensätze mit Hilfe von Rechnermodulen komprimiert.

Das Verfahren verwendet eine Qualitätsdiskriminierung, d.h. Daten, die für die spätere Defektanalyse wichtig sind, werden gesondert behandelt. Dazu gehören insbesondere die Spitzenwerte des Signals, die eine Aussage über die Defekttiefe zulassen. Des Weiteren sind die Werte in der näheren Umgebung dieser Spitzenwerte von Bedeutung, sie haben Einfluss auf die Bestimmung der Defektgröße.

Durch Kenntnis der Struktur der Daten, deren Gewichtung für die Offline-Defektbestimmung maßgebend ist, kann man durch Entwicklung einer speziellen an die Anforderungen der Signalauswertung angepassten Kompressionsmethode deutlich höhere Kompressionsfaktoren bei reduzierter Defektfehlerbestimmung erzielen. Auf dieser Tatsache basiert das Verfahren, das die Daten mit unterschiedlicher Genauigkeit, dem Approximationsfehler, komprimiert.

Bei relevanten Daten, d.h. Daten in Bereichen von Spitzenwerten und deren näheren Umgebung wird möglichst verlustfrei komprimiert, während bei Daten, die für die Defektgrößenbestimmung keine oder weniger Bedeutung haben, ein gewisser parametrisierbarer Fehler in Kauf genommen wird. Der Algorithmus erreicht somit bei höherer Wiedergabetreue signifikanter Daten eine Verbesserung der Kompression.

Das Grundkonzept ist eine gesonderte Kompression/Reduktion für die relevanten und nicht relevanten Daten. Dazu gehört die Erkennung und Trennung der Daten in die Anzeigenklassen "Hohe Aktivität", mindestens eine Anzeigeklasse "mittlere Aktivität" und die Untergrund-Anzeigeklasse "keine Aktivität", im fachmännischen Sprachgebrauch "high_activity", "low_activity" und "no_activity". In diesen drei Anzeigeklassen werden die Daten mit jeweils dafür vorgesehenen und damit verschiedenen Kompressionsalgorithmen bearbeitet und abgelegt. Die komprimierten Daten sind demnach verlustfrei bis stark verlustbehaftet. In der Anzeigeklasse "high_activity" erfolgt eine wenig verlustbehaftete bis verlustfreie Kompression. In der mindestens einen Anzeigeklasse "low_activity" und der Anzeigeklasse "no_activity" wird eine Approximation mit variablem Approximationsfaktor durchgeführt.

Eine dynamische Appoximationskontrolle überprüft und kontrolliert die Wiedergabetreue der Kompression bei lokalen Maxima/Minima. Durch die Klasseneinteilung bietet das Verfahren den geringsten Informationsverlust bei den wesentlichen Daten. Damit auch in der Anzeigeklasse "high_activity" eine bei sehr großem Datenanfall/sehr hoher Abtastrate die Datenmenge nötigenfalls beschränkt werden kann, ist auch in dieser Anzeigeklasse eine allerdings wenigverlustbehaftete Approximation durchführbar.

Die Einteilung der Daten in eine dieser mindestens drei Klassen erfolgt durch parametrisierbare Diskriminatoren. Das sind parametrisierbare digitale Tiefpässe, die ein ursprüngliches Signal entsprechend dem eingestellten Parameter filtern. Während eines Prüflaufes können die Parameter bei sich verändernden Prüfgeschwindigkeit adaptiv geändert werden. Aus der Differenz des ursprünglichen mit dem gefilterten Signal wird die Klasseneinteilung vorgenommen. Übersteigt die absolute Differenz zwischen gefiltertem und ursprünglichem Signal die Schwelle für "high_activity" bzw. "low_activity", so wird der Wert der jeweiligen Klasse zugeordnet, anderenfalls gehört er zur Klasse "no_activity".

Beginn und Ende von Bereichen der Eingangsdaten, in denen Werte der gleichen Klasse zugeordnet wurden, werden unter Einhaltung von Randkriterien in einer Tabelle als Anzeigen vermerkt.

Eine weitere Aufgabe ergibt sich aus der Kenntnis:
Anfangs- und Endbereiche sind in der Anzeigeklasse "high_activity" und mindestens der einen Anzeigeklasse "low_activity" von großer Bedeutung, da diese bei der späteren Dekomprimierung der Daten unmittelbar in die Genauigkeit der Darstellung signifikanter Bereiche eingehen. Aus diesem Grund werden zu kleine Lücken zwischen zwei Anzeigeklassen "high_activity" aufgefüllt, d.h. andere bzw. niedrigere, dort vermerkte Aktivitätsbereiche werden zum Löschen markiert. Die Entscheidung, ob eine Lücke zwischen zwei "high_activity"-Bereichen zu klein ist, ist parametrisierbar. Der Parameter dazu heißt "gap_limit_high".

Der gleiche Vorgang wird für die Anzeigeklasse "low_activity" mit der Ausnahme wiederholt, dass Bereiche der Klasse "high_activity" auf keinen Fall gelöscht werden. Somit werden nur die "no_activity"-Anzeigen einer "low"-"no"-"low"-Folge zum Löschen markiert, wenn die Lücke kleiner als "gap_limit_low" ist. Die restlichen nicht zum Löschen markierten Anzeigen werden anschließend in eine neue Tabelle umkopiert.

Dieses Vorgehen des Lückenfüllens erfüllt noch nicht die Tatsache, dass den Anfangs- und Endbereichen der starken und mittleren Aktivität besondere Aufmerksamkeit zukommt, sondern stellt lediglich sicher, dass diese Bereiche nicht zu zerstückelt sind. Das eigentliche Erweitern von Anfang und Ende der Anzeigen geschieht in einem folgenden Schritt.

Als Ergebnis liegt schließlich ein Array (anz_tab) vor in dem unterschiedliche Aktivitätsbereiche und deren Anfangsindex in den Eingangsdaten vermerkt sind. Auf dieses Array kann ein weiterer Verfahrensschritt aufsetzen. Dieser ist für die eigentliche Komprimierung der Daten zuständig.

Als Kompressionsmethode wird das Approximationsverfahren gewählt, d.h. es wird nicht jeder Wert abgespeichert, sondern immer eine Anzahl von Werten ausgelassen, die später bei der Dekomprimierung der Daten durch Approximation wieder zurückgewonnen werden. Als Approximationsfunktion wird in der Regel eine lineare Funktion, Gerade, verwendet. Auch nichtlineare Funktionen können bei sich ändernden Anforderungen implementiert werden. Dazu muss lediglich in einem Parameterdatensatz die Funktionsbeschreibung niedergelegt werden.

Die Approximation erzeugt in der Regel Abweichungen vom ursprünglichen Wert, der als Approximationsfehler bezeichnet wird. Dieser hängt direkt mit den zugrunde liegenden Daten und der Anzahl der übersprungen Werte zusammen. Werden viele Werte übersprungen und variieren die Werte innerhalb des so entstanden Intervalls stark, so macht man bei der Dekompression einen großen Fehler, da man Anfang und Ende des Intervalls mit einer Geraden, lineare Approximation, verbindet. Liegen alle übersprungenen Werte auf der Funktion, so ist der Approximationsfehler gleich Null. Jeder Klasse wird ein Approximationsintervall: gap_na, gap_la und gap_ha und ein maximaler Approximationsfehler, als Parameter zugewiesen. Die Parameter werden vor Beginn der Kompression in einem gesonderten Datensatz abgelegt. Wird in einer Klasse der Approximationsfehler überschritten, so wird das Interpolatonsintervall reduziert und die Approximation neu aufgesetzt. Dies wird, ausgehend von der aktuellen Intervalllänge, solange durchgeführt, bis für alle Messwerte des Intervalls der Approximationsfehler unterhalb der vorgegebenen Schranke bleibt.

Weiterhin kann innerhalb einer Klasse die Intervalllänge variieren, wenn das Ende der Klasse erreicht wird. Bei einer Änderung gegenüber dem vorgegebenen Parameter muss die Anzahl bei der Dekomprimierung natürlich bekannt sein, deshalb wird diese Anzahl an übersprungenen Werten ebenfalls in den komprimierten Daten abgespeichert. Als Identifikation eines solchen Datums wird etwa die Kennung "7" gewählt. - Auch bei "7" ist das least significant bit, LSB, "1". - Da man diese Differenz als ein Byte abspeichert, beträgt sie maximal 32 =5 Bit. Die Differenz braucht nicht vorzeichenbehaftet sein, da sie immer positiv ist. Dies reicht aus, da maximal 32 Werte im Modus "no_activity" oder "low_activity" übersprungen werden.

Die Angabe ob der gerade komprimierte Wert nun mehr oder weniger von Bedeutung ist, liefert eine Tabelle ("anz_tab"). Eine Routine "xredu" bearbeitet die Eingangsdaten dann gemäß dieser Angaben in drei Modi. Im ersten, dem Modus "no_activity", überspringt sie eine Anzahl "noa_intv" an Werten, beispielsweise 20, im zweiten, dem Modus "low_activity", verkleinert sie die Anzahl auf "low_intv", beispielsweise 5, während im Modus "high-activity" gar kein Wert übersprungen wird, "high_intv" = 1.

Zudem wird im Modus "low_activity" - und nur dort - vor der eigentlichen Abspeicherung der Werte überprüft, welchen Fehler die Dekomprimierung bei der aktuellen Anzahl an übersprungenen Werten, "low_intv", machen würde. Dem Anfangs- und Endwert eines vorgegebenen Intervalls wird eine mittlere Steigung berechnet. Jeder Messwert des Intervalls wird mit dem linear approximierten Wert verglichen. Übersteigt die Differenz zwischen approximiertem und realem Messwert eine einstellbare Schwelle, so wird die Intervalllänge reduziert, beispielsweise halbiert. Dadurch erhöht sich die Genauigkeit der Approximation.

Da die Größe des Approximationsintervalls innerhalb einer Anzeige nicht konstant bleibt, muss sie, sobald sie sich von "low_intv" unterscheidet, dem Dekomprimierungsalgorithmus mitgeteilt werden, d.h. die Anzahl an übersprungenen Werten muss in diesem Fall ebenfalls in den komprimierten Daten abgespeichert werden.

Die eigentliche Kompression verwendet ein variables Datenformat gemäß Tabelle 1. Damit kann der Informationsgehalt der Daten optimiert werden. Je nach Art und Bedeutung wird die Information in einem 1-oder 2-Byte Format abgelegt. Ein Präfix Bit bestimmt das Format. Der Beginn einer Anzeige erfolgt immer in einem 2-Byte Format. Neben dem Präfix Bit wird der Anzeigemodus und der zum Anzeigenstart gehörende Messwert abgelegt.

Um eine zusätzliche Kompression unabhängig vom Anzeigemodus zu erlangen, werden nicht die eigentlichen Werte, 2 Bytes, abgespeichert, sondern die Differenzen zum jeweils zuletzt abgespeicherten Wert, sofern sich diese in einem Byte ablegen lassen (bekannt als Delta-Transformation). Um dies zu ermöglichen, müssen die komprimierten Werte mit Kennungen versehen werden, die bei der Dekomprimierung erkennen lassen, ob es sich um eine Differenz oder um einen realen Wert handelt und in welchem Modus der jeweilige Wert komprimiert wurde. Dies geschieht folgendermaßen:
Jeder erste Wert nach einem Moduswechsels wird als 12-Bit-Realwert abgespeichert. Dabei wird er um vier Bit nach links "geshiftet" und ihm die Kennung:
   "1" für "high_activity",
   "3" für "no_activity" oder
   "5" für "low_activity"
   angehängt. Die Kennung des jeweiligen Modus erhält auch jeder andere Wert, der innerhalb eines bestimmten Aktivitätsbereiches, aufgrund einer zu großen Differenz, als Realwert abgespeichert werden muss. Die Unterscheidung von Realwerten und Differenzen kann somit über das "Least Significant Bit" geschehen, da dies bei den Modi-Kennungen immer "1" ist und bei Differenzen nur dafür gesorgt werden muss, dass es immer "0" ist. Dazu wird die Differenz einfach um ein Bit nach links verschoben, wodurch sich allerdings der in einem Byte maximal darstellbare Bereich von -128 bis +127 auf -64 bis +63 verringert.

Im Anzeigenmodus "no_activity" und "low_activity" werden aus den Datenfolgen einzelne Werte, sogenannte Stützpunkte, ausgewählt. Die Differenz zwischen zwei Stützpunkten, d.h. die Anzahl der übersprungenen Messwerte bzw. die Intervalllänge wird je nach Anzeigemodus durch die Parameter noa_intv und low_intv bestimmt. Während der Dekompression erfolgt zwischen den Stützpunkten eine lineare Approximation. Die für die Dekompression wichtigen Parameter noa_intv und low_intv werden als vorgegeben angenommen und in einem gesonderten Header-Datensatz abgelegt.

In einer weiteren Option können innerhalb des "low_activity"-Bereiches lokale Maxima, die durch einen zusätzlichen Algorithmus gefunden werden, bezüglich Amplitude und Ort genau wiedergegeben werden. Bei der Komprimierung wird darauf geachtet, dass, die Grenzen für ein neu aufzusetzendes Intervall nicht über die lokalen Maxima/Minima hinausgehen, d. h. die Intervalllänge wird durch Extremwerte und durch die Approximationskontrolle bestimmt. Die Intervallänge wird so durch die Differenz zum nächsten Extremwertindex bestimmt. Somit ist sichergestellt, dass der Maximal bzw. Minimalwert genau abgelegt wird, sei es nun als Realwert oder als Differenz, und dass er damit bei der Dekomprimierung einen Stützpunkt der Approximation darstellt.

Als Sensoren/Messwertgeber zur Fehlermessung an der Rohrwand werden nach Anspruch 2 einerseits Ultraschallsensoren bei sonarer Detektion eingesetzt - Ultraschallmolch oder andrerseits nach Anspruch 3 Magnetfeldsonden bei Magnetfelddetektion - Streuflussmolch.

Das Verfahren erhöht die Kompression und gleichzeitig die Wiedergabetreue im Defektbereich. Das neue Verfahren ist ein "Mehr- oder beispielsweise Drei-Klassen-Approximations / Kompressionsverfahren".

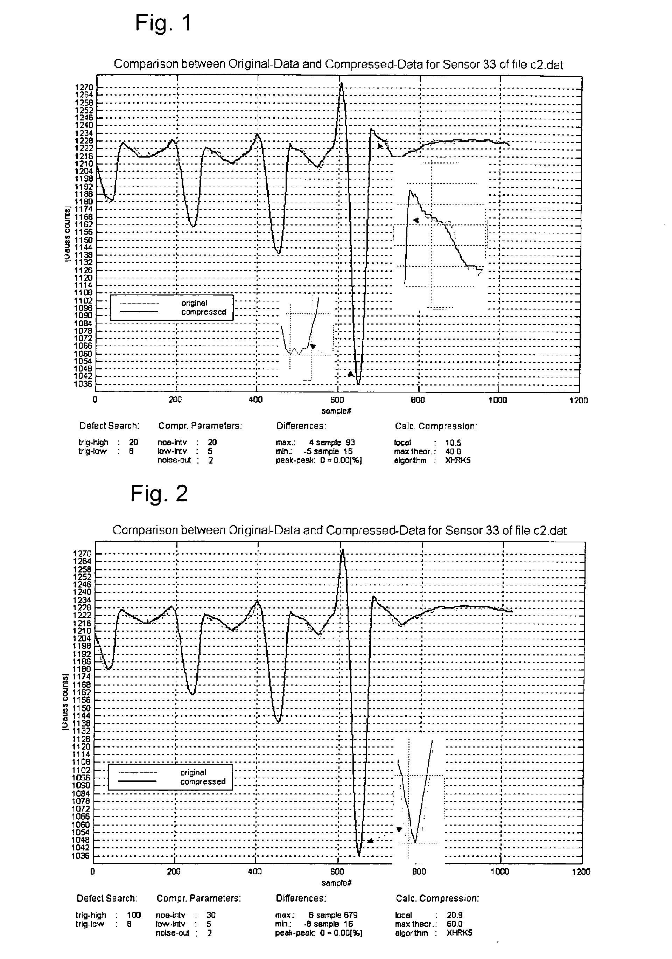

Die Leistungsfähigkeit des Mehr-Klassen- Approximationsverfahrens, hier dem Drei-Klassen- Approximationsverfahren, wird durch Vergleich der vier Figuren 1 bis 4 demonstriert:
Figuren 1 und 2 zeigen das Drei-Klassen-Approximations / Kompressions-Verfahrens eines Sensorsignals "long seam"-Rohr mit diversen Defekten. Der nichtkomprimierte Defektverlauf, die ursprüngliche Messkurve, ist am dünnen, zitterigen Kurvenzug erkenntlich. Der aus der Kompression und Dekompression gewonnene Kurvenzug ist, dick gezeichnet, darüber gelegt. Die Kompression betrug in Figur 1 10,5 und nähert die Messkurve mit durchweg nur geringen Ungenauigkeiten an. In Figur 2 ist die Kompression 20,9, die aus der Kompression gewonnene Kurve folgt dem Verlauf der Messkurve schon nahezu ohne Abweichung.

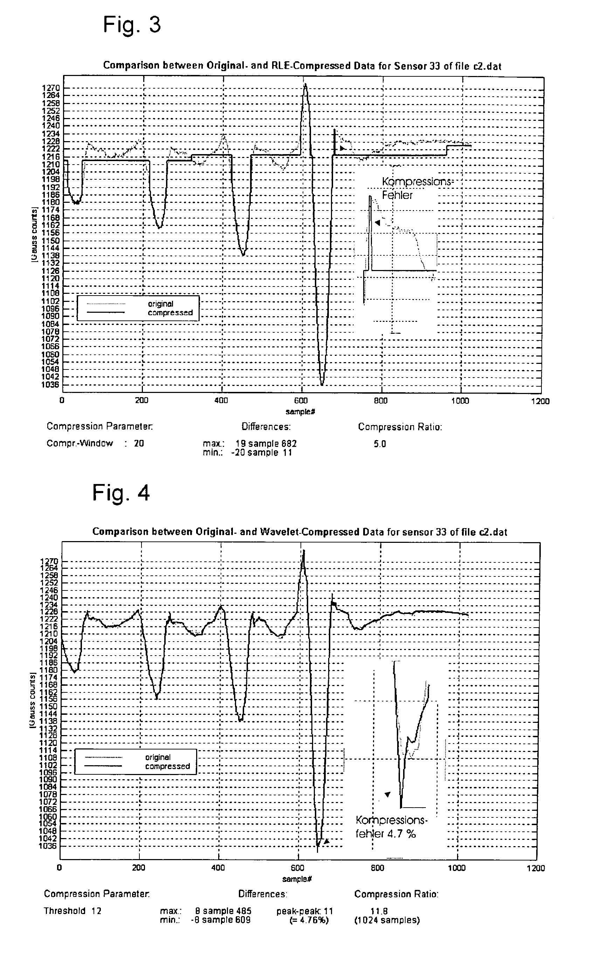

Der gleiche Defektverlauf wurde in der Figur 3 mit der RLE-Kompression komprimiert und daraus dekomprimiert darüber gelegt. Die Abweichungen sind bereichsweise ganz erheblich, wie die aus der Kompression gewonnene, darüber gelegte dick ausgezogene Kurve zeigt. Die Kompression betrug in diesem Beispiel 5,0. In Figur 4 schließlich wird die Wavelet-Kompression des Sensorsignals "long seam"-Rohr mit denselben Defekten artgleich wie in den vorangehenden Figuren wiedergegeben. Die Kompression beträgt hier 11,8. In der Dekompression wird ein Spitze-zu-Spitze-Fehler von 4,7% erzeugt.

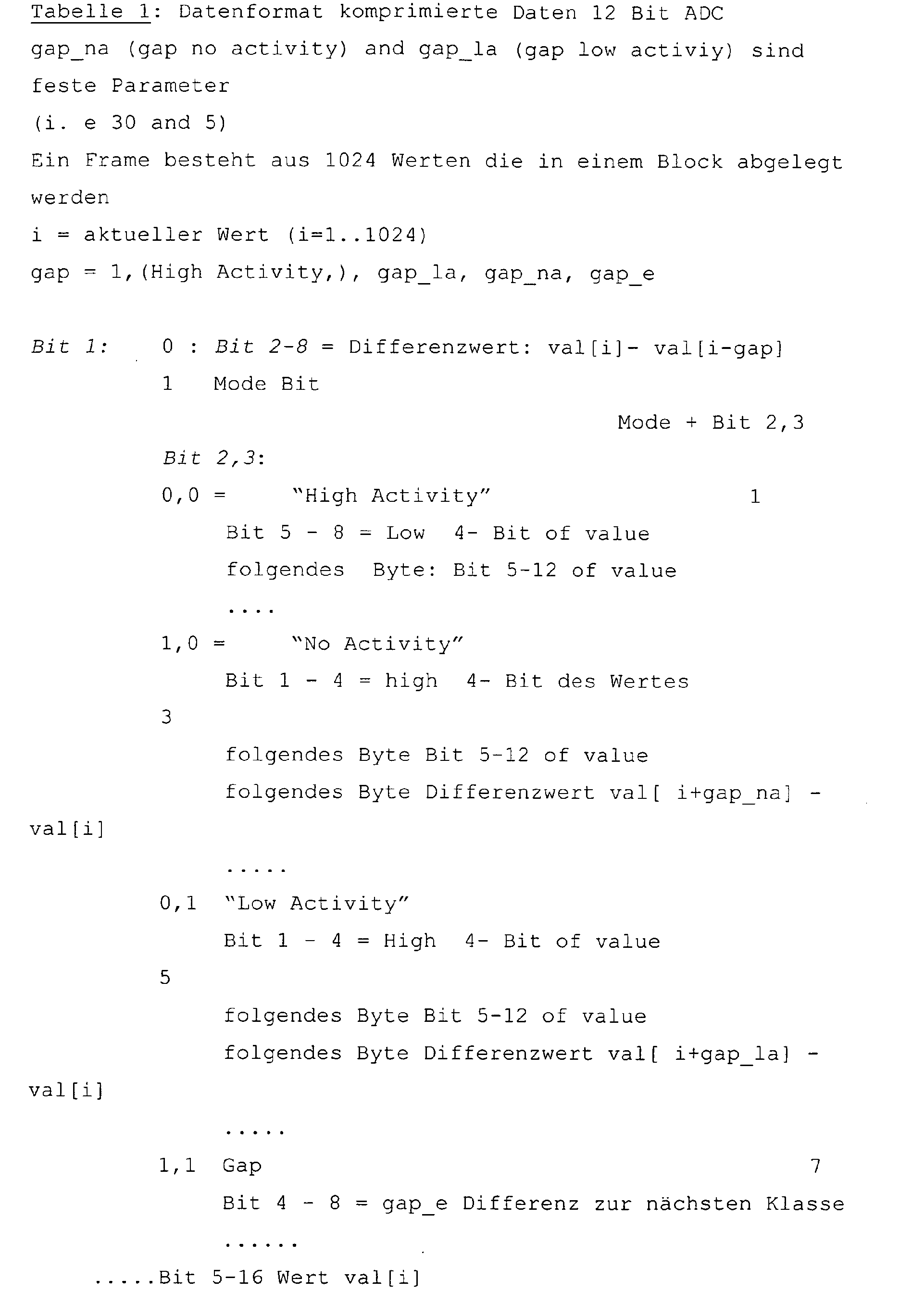

## Patentansprüche

1. Verfahren zur Kompression von Daten, die während der Messfahrt eines Molches durch eine Rohrleitung gewonnen werden, der mit Sensoren/Messwertgeben zur Messung von Korrosion und Rissen in der Rohrwand bestückt ist,
bestehend aus den Schritten:
die Messwerte der Sensoren werden mit Hilfe von Analog-Digital-Wandlern in einer Auflösung von 12 - 16 Bit digitalisiert,
zur Abspeicherung mit Hilfe von Rechnermodulen datenkomprimiert,
**gekennzeichnet durch** die Verfahrensschritte:
die aus den Messsignalen gewonnenen Daten werden hinsichtlich ihrer Relevanz einer gesonderten Kompression/Reduktion unterworfen,
aus der Differenz des ursprünglichen Signals mit dem in einem digitalen, adaptivem und parametrisierbaren Tiefpass gefilterten Signal wird eine Klasseneinteilung in mindestens drei Klassen/Modi vorgenommen, nämlich:
eine Klasse/ein Modus für "Hohe Aktivität",
eine Klasse/ein Modus für "Keine Aktivität" und
mindestens eine Klasse/ein Modus für "Mittlere Aktivität",
jeder Klasse wird ein Approximationsintervall mit einem maximalen Approximationsfehler als Parameter zugewiesen, wobei die Parameter vor Beginn der Kompression in einem gesonderten Datensatz abgelegt werden,
bei Überschreiten des Approximationsfehlers in einer Klasse wird das Approximationsintervall reduziert und die Approximation neu aufgesetzt, und zwar, ausgehend von der aktuellen Intervalllänge, solange, bis für alle Messwerte des Intervalls der Approximationsfehler unterhalb einer vorgegebenen Schranke bleibt,
dabei kann die Intervalllänge innerhalb einer Klasse variieren, wenn das Ende der Klasse erreicht wird,
die Anzahl übersprungener Werte wird in den komprimierten Daten abgespeichert und ist damit bei einer Änderungen gegenüber dem vorgegebenen Parameter bei der Dekomprimierung in der Anzahl bekannt,
die Identifikation eines solchen Datums aus den Daten wird mit einer Kennung versehen und die Differenz als Informationszeichen ,z. B. ein Byte, abgespeichert,
in allen Modi können vor der Abspeicherung die Werte überprüft werden, welchen Fehler die Dekomprimierung bei der aktuellen Anzahl an übersprungenen Werten machen würde, hierzu wird jeder Messwert des Intervalls mit dem approximierten Wert verglichen und bei Übersteigung der Differenz zwischen approximiertem und realem Messwert die Intervalllänge reduziert, wodurch sich die Genauigkeit der Approximation erhöht, als Approximationsfunktion wird dazu ein Polynom mindestens ersten Grades vorgegeben,
die Größe des Approximationsintervalls bleibt innerhalb einer Anzeige nicht konstant und wird deshalb, sobald sie sich vom vorgegebenen parametrisierten Approximationsintervall unterscheidet, dem Dekomprimierungsalgorithmus mitgeteilt, und damit wird die Anzahl an übersprungenen Werten in einem solchen Fall ebenfalls in den komprimierten Daten abgespeichert,
innerhalb eines Bereichs der Klasse/des Modus "Mittlere Aktivität" lokale Maxima **durch** einen zusätzlichen Algorithmus gefunden werden:
bei der Komprimierung werden die Grenzen für ein neu aufzusetzendes Intervall die Intervalllänge **durch** die Differenz zum nächsten Extremwertindex bestimmt,
die für die Dekompression wichtigen Parameter werden als vorgegeben angenommen und in einem gesonderten, vorangestellten Datensatz, einem Header-Datensatz, abgelegt.

2. Verfahren nach Anspruch 1, **dadurch gekennzeichnet, dass** als Sensoren zur Fehlermessung an der Rohrwand Ultraschallsensoren eingesetzt werden - Ultraschallmolch.

3. Verfahren nach Anspruch 1, **dadurch gekennzeichnet, dass** als Sensoren zur Fehlermessung an der Rohrwand Magnetfeldsonden eingesetzt werden - Streuflussmolch.
